# EUROPÄISCHE PATENTSCHRIFT

(11) **EP 1 166 993 B1**
(45) Veröffentlichungstag und Bekanntmachung des Hinweises auf die Patenterteilung: **04.08.2004**
(21) Anmeldenummer: 01112338.7
(22) Anmeldetag: 19.05.2001
(51) Int. Cl.: B29C 45/42

(54) **Vorrichtung zum Spritzgiessen von Kunststoffartikeln**
Apparatus for injection moulding of plastic articles
Dispositif pour mouler par injection des articles en matière plastique

(30) Priorität: 19.06.2000 DE 10029154
(43) Veröffentlichungstag der Anmeldung: 02.01.2002
(73) Patentinhaber: HEKUMA GmbH, 85386 Eching (DE)
(72) Erfinder: Herbst, Richard, 85402 Kranzberg (DE)
(74) Vertreter: Klingseisen, Franz, Dipl.-Ing.

(56) Entgegenhaltungen:
- WO-A-99/30891
- DE-A- 19 727 749
- US-A- 5 114 327
- PATENT ABSTRACTS OF JAPAN vol. 13, no. 194 (M-823), 10. Mai 1989 (1989-05-10) -& JP 01 022524 A (SAILOR PEN CO LTD), 25. Januar 1989 (1989-01-25)
- PATENT ABSTRACTS OF JAPAN vol. 13, no. 194 (M-823), 10. Mai 1989 (1989-05-10) -& JP 01 022523 A (SAILOR PEN CO LTD), 25. Januar 1989 (1989-01-25)
- PATENT ABSTRACTS OF JAPAN vol. 13, no. 036 (M-790), 26. Januar 1989 (1989-01-26) -& JP 63 247016 A (SAILOR PEN CO LTD), 13. Oktober 1988 (1988-10-13)

## Beschreibung

Die Erfindung betrifft eine Vorrichtung zum Spritzgießen nach dem Oberbegriff des Anspruchs 1.

Eine Vorrichtung dieser Art ist aus JP-A-1022523 bekannt, wobei auf einer Führung unterhalb der Werkzeugteile ein Ständer quer zur Längsachse der Spritzgießmaschine verschiebbar ist, an dem ein Arm zum Entnehmen der Kunststoffartikel aus dem Werkzeug verschwenkbar ist.

Bei einer aus DE 198 48 419 C1 bekannten Spritzgießmaschine bildet der Handlingarm im wesentlichen eine Vertikalebene, die sich quer zur Werkzeuglängsachse erstreckt. Der Handlingarm wird dabei an einer Führung bzw. Führungsschiene gehalten, die oberhalb des Handlingarms und damit oberhalb des Werkzeugs liegt. Der Handlingarm hängt also von dieser Führungsschiene nach unten und kann entlang der Schiene verfahren werden. Diese Konfiguration wird bei herkömmlichen Kunststoff-Spritzgießmaschinen im allgemeinen deswegen gewählt, weil nach dem Herausfahren des Handlingarms aus dem Werkzeug die am Handlingarm befindlichen Kunststoffartikel abgeführt werden sollen. Hierzu wird in der Regel ein Förderer oder dergleichen verwendet, der sich unterhalb des Handlingarms befindet. Es ist daher zweckmäßig, die Kunststoffartikel vom Handlingarm nach unten abzunehmen und auf den Förderer zu überführen.

Diese herkömmliche Gestaltung von Kunststoff-Spritzgießmaschinen bzw. den zusammen mit diesen verwendeten Handlingsystemen ist jedoch bei einigen Einsatzfällen von Nachteil. Hier ist in erster Linie an die Herstellung von Kunststoffartikeln unter Reinraumbedingungen zu denken. Kunststoff-Spritzgießmaschinen werden nämlich in der pharmazeutischen und medizintechnischen Industrie eingesetzt, um Kunststoffartikel herzustellen, die später im medizinischen Betrieb, insbesondere im Laborbetrieb, eingesetzt werden sollen. Hierzu gehören z.B. Pipetten, Petrischalen und andere ähnliche Artikel, wie sie im Medizin- und Laborbetrieb verwendet werden. Bei der Herstellung dieser Artikel ist man bestrebt, bereits zum Zeitpunkt der Herstellung eine möglichst aseptische Umgebung zu schaffen, damit die Artikel nach ihrer Herstellung in der Kunststoff-Spritzgießmaschine, ihrer Entnahme und ihrer Abförderung nicht oder zumindest nicht mehr so aufwendig sterilisiert werden müssen.

In Reinräumen der hier interessierenden Art wird üblicherweise ein sogenannter Laminarflow eingestellt. Hierunter versteht man eine möglichst homogene Luftströmung, die vertikal von der Decke zum Boden des Raumes hin gerichtet ist. Dem Reinraum wird dabei hochgereinigte Luft über entsprechende Elemente in der Decke des Raumes zugeführt, und die am Boden des Raumes abgeführte Luft wird anschließend einer Reinigung unterzogen. Der Sinn dieser Maßnahme ist, allfällige Partikel, die im Reinraum vorhanden sind oder dort entstehen, sogleich abzuführen, damit keine Kontamination der in dem Reinraum gehandhabten Gegenstände eintritt.

Bei einem Handlingsystem zum Einsatz bei Kunststoff-Spritzgießmaschinen besteht nun insofern ein Problem darin, daß der entlang einer Achse in einer Führung laufende Handlingarm unvermeidbare Schmutzpartikel erzeugt. Diese fallen im wesentlichen im Bereich der Führung, speziell im Bereich der dort verwendeten Führungselemente an. Die Partikel entstehen dabei im wesentlichen durch Abrieb an den beteiligten Führungselementen oder durch Zerstäubung von Schmiermitteln und dergleichen.

Verwendet man nun eine Vorrichtung bzw. ein Handlingsystem herkömmlicher Bauart in einer solchen Reinraumatmosphäre mit Laminarflow, so werden die im Bereich der Führung anfallenden Partikel zwar durch den Luftstrom zum Boden des Raumes hin verbracht und dort entsorgt, sie können jedoch auf ihrem Wege dorthin in den Bereich der hergestellten Kunststoffartikel gelangen und diese kontaminieren.

Der Erfindung liegt daher die Aufgabe zugrunde, eine Vorrichtung der eingangs genannten Art dahingehend weiterzubilden, daß diese Nachteile vermieden werden. Insbesondere soll die Erfindung eine Vorrichtung zur Verfügung stellen, die unter Reinraumbedingungen einsetzbar ist.

Die der Erfindung zugrunde liegende Aufgabe wird durch die Merkmale im kennzeichnenden Teil des Anspruchs 1 gelöst.

Indem man sich nämlich von dem herkömmlichen Konzept bekannter Vorrichtungen löst, die Führung für den Arm des Handlingsystems an der Oberseite des Armes anzubringen, verlegt man den Ort, an dem die kontaminierenden Partikel entstehen können, zur Unterseite der Vorrichtung und damit in einen Bereich unterhalb der Ebene, in der normalerweise die Kunststoffartikel gehandhabt werden. Wenn dann die Vorrichtung in einem Reinraum mit darin herrschendem Laminarflow eingesetzt wird, werden die in der Führung entstehenden Partikel unmittelbar zum Boden hin entsorgt und kreuzen auf ihrem Weg nicht mehr den Verfahrweg der Runststoffartikel. Da der Förderer oberhalb der zweiten Achse verläuft, ist gewährleistet, daß bei der Verwendung in einem Reinraum die in der Führung anfallenden Partikel vom Laminarflow mitgenommen werden, ohne daß sich die Flugbahn der Partikel mit dem Förderweg der Artikel kreuzt. Eine Kontamination ist damit so gut wie ausgeschlossen.

Bei einer bevorzugten Weiterbildung der erfindungsgemäßen Vorrichtung ist die Führung unterhalb der Werkzeugteile angeordnet.

Diese Maßnahme hat den Vorteil, daß eine besonders einfache Konstruktion der Vorrichtung möglich ist, weil die Bewegungsbahnen der Werkzeugteile und der Führung sich nicht schneiden.

Bei einer weiteren Variante der Erfindung verläuft die zweite Achse im wesentlichen im Bereich der Führung, und der Arm ist um die zweite Achse aus einer im wesentlichen vertikalen Stellung in eine im wesentlichen horizontale Stellung verschwenkbar.

Diese Maßnahme hat den Vorteil, daß eine besonders einfache Abführung der Kunststoffartikel möglich ist, wenn der Arm unmittelbar verschwenkbar ist, so daß die Kunststoffartikel beispielsweise nur noch vom Arm auf ein Förderband fallen müssen.

Dies gilt insbesondere dann, wenn die Kunststoffartikel in der horizontalen Stellung vom Arm auf einen Förderer übergebbar sind.

Es wurde bereits mehrfach darauf hingewiesen, daß die Vorrichtung in besonders bevorzugter Weise in einem Reinraum mit einem in dem Reinraum herrschenden, vertikal nach unten gerichteten Laminarflow verwendet werden kann. Dies ist jedoch nicht einschränkend zu verstehen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte Seitenansicht eines Ausführungsbeispiels einer erfindungsgemäßen Vorrichtung;
- Fig. 2: eine Draufsicht auf die Vorrichtung gemäß Fig. 1.

In den Figuren bezeichnet 10 insgesamt eine Kunststoff-Spritzgießmaschine von an sich herkömmlicher Gestaltung. Die Maschine 10 umfaßt eine erste Werkzeughälfte 12 und eine zweite Werkzeughälfte 14. In der ersten Werkzeughälfte 12 sind Formhohlräume 16 angedeutet.

Die Werkzeughälften 12, 14 sind relativ zueinander entlang einer ersten, horizontal verlaufenden Achse 18 in Richtung eines Doppelpfeils 19 verfahrbar. Dabei ist üblicherweise eine Werkzeughälfte stationär und die andere Werkzeughälfte beweglich ausgebildet. Im Rahmen der vorliegenden Erfindung sind aber auch selbstverständlich andere Konfigurationen von Werkzeugen einsetzbar, beispielsweise sogenannte "Etagenwerkzeuge" mit drei oder mehr relativ zueinander verfahrbaren Werkzeugteilen.

Mit 20 ist insgesamt ein Handlingsystem angedeutet. Das Handlingsystem 20 weist einen Arm 22 auf. Der Arm 22 erstreckt sich im wesentlichen in einer Vertikalebene. Folglich hat er eine Oberseite 22a und eine Unterseite 22b.

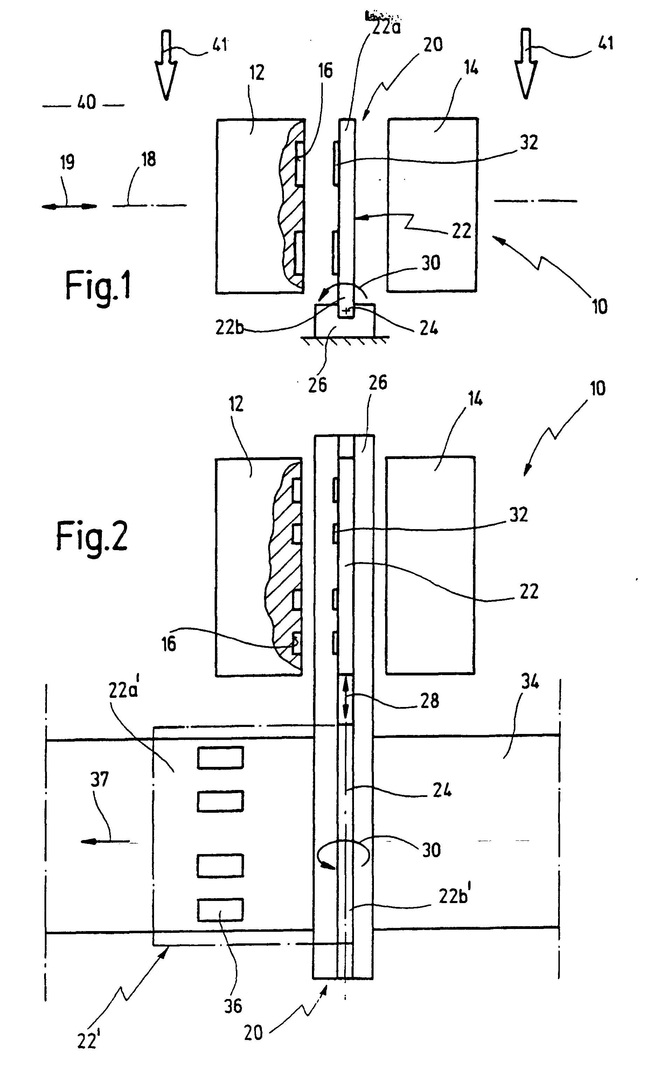

Der Arm 22 ist entlang einer zweiten, ebenfalls horizontalen Achse 24 verfahrbar. Die zweite Achse 24 verläuft im wesentlichen unter einem rechten Winkel zur ersten Achse 18. Praktisch wird die zweite Achse 24 durch eine Führung 26, beispielsweise eine Führungsschiene, gebildet. Entlang dieser Führung 26 kann der Arm 22 in Richtung des in Fig. 2 eingezeichneten Doppelpfeils 28 verfahren werden. Die Führung 26 bzw. Führungsschiene ist so lang bemessen, daß der Arm 24 in der Offenstellung der Werkzeughälften 12, 14 zwischen diese verfahren werden kann, in der Schließstellung der Werkzeughälften 12, 14 aber in eine Stellung außerhalb der Werkzeughälften 12, 14 verfahrbar ist. Dies ist besonders deutlich in Fig. 2 zu erkennen.

Mindestens in dem Bereich außerhalb der Bewegungsbahn der Werkzeughälften 12, 14 ist die Führung 26 im Bereich der zweiten Achse 24 so ausgebildet, daß der Arm 22 zusätzlich um die zweite Achse 24 verschwenkt werden kann, wie in den Figuren 1 und 2 mit einem Pfeil 30 angedeutet.

Der Arm 22 trägt eine Mehrzahl von Aufnahmen 32, beispielsweise Saugnäpfen oder dergleichen, mit denen Kunststoffartikel aus den Formhohlräumen 16 entnommen werden können.

Neben den Werkzeughälften 12, 14 läuft ein Förderer oder Förderband 34, das sich oberhalb der zweiten Achse 24 erstreckt. Mit dem Förderband 34 können die Kunststoffartikel 36 übernommen und abgefördert werden, wie mit einem Pfeil 37 angedeutet.

Die vorstehend beschriebene Vorrichtung wird vorzugsweise in Reinräumen verwendet. Der Reinraum ist in Fig. 1 mit 40 angedeutet. Im Reinraum herrscht ein sogenannter Laminarflow 41, d.h. eine homogene Luftströmung, die in vertikaler Richtung von einer Decke zu einem Boden des Reinraums 40 verläuft. Reinräume der hier interessierenden Art sind allgemein bekannt und brauchen daher nicht näher erläutert zu werden.

Die Wirkungsweise der in Fig. 1 und 2 gezeigten Vorrichtung ist wie folgt:

In der Kunststoff-Spritzgießmaschine 10 werden die Kunststoffartikel 36 in herkömmlicher Weise hergestellt. Nach Beendigung des Einspritzvorganges fahren die Werkzeughälften 12, 14 auseinander, und der Arm 22 fährt in den Zwischenraum zwischen den Werkzeughälften 12, 14. Dies ist die in Figuren 1 und 2 mit durchgezogenen Strichen eingezeichnete Betriebsstellung des Arms 20.

Mittels der Aufnahmen 32 werden nun die Kunststoffartikel 36 aus den Formhohlräumen 16 der ersten Werkzeughälfte 12 entnommen. Der Arm 22 fährt nun in vertikaler Ausrichtung entlang der zweiten Achse 24, d.h. entlang der Führung 26, nach außen, bis er die Bewegungsbahn der Werkzeughälften 12, 14 verlassen hat und sich in etwa oberhalb des Förderbandes 34 befindet. Während dieser Zeit befindet sich folglich die Oberseite 22a des Armes 22 oben und die Unterseite 22b im Bereich der zweiten Achse 24 bzw. der Führung 26.

Nach Erreichen der zweiten Betriebsstellung wird nun der Arm 22 um die zweite Achse 24 verschwenkt, und zwar um etwa 90°, so daß er in die in Fig. 2 strichpunktiert eingezeichnete Stellung 22' gelangt. In dieser zweiten Betriebsstellung befindet sich die Oberseite 22a im wesentlichen auf derselben Höhe wie die Unterseite 22b. Der Arm 22 liegt folglich etwa parallel oberhalb des Förderbandes 34, so daß die Kunststoffartikel 36 durch einfaches Lösen der Haltekraft in den Aufnahmen 32 unter Schwerkrafteinfluß auf das Förderband 34 fallen und abgefördert werden können (Pfeil 37).

Wichtig ist in diesem Zusammenhang, daß sich die Führung 26 des Armes 22 im Bereich der Unterseite 22b, jedenfalls aber unterhalb der Formhohlräume 16 bzw. der Aufnahmen 32 in der ersten Betriebsstellung des Armes 22 befindet. Etwa im Bereich der Führung 26 entstehende Partikel werden dann durch den Laminarflow 41 nach unten mitgenommen und über den Boden des Reinraums 40 entsorgt.

Die Führung 26 befindet sich unterhalb des Förderbandes 34, so daß die erwähnten Partikel auch nicht in den Bereich des Förderbandes 34 gelangen können.

Insgesamt ist daher nicht zu befürchten, daß in der Führung 26 anfallende Partikel die Kunststoffartikel 36 kontaminieren können, da ihre Bewegungsbahn (Mitnahme durch den Laminarflow 41) die Bewegungsbahn der Kunststoffartikel 36 nicht kreuzt.

## Patentansprüche

1. Vorrichtung zum Spritzgießen von Kunststoffartikeln (36) mit einem mehrere Werkzeugteile (12, 14) umfassenden Werkzeug, bei dem die Werkzeugteile (12,14) relativ zueinander entlang einer ersten, horizontal verlaufenden Achse (18) zwischen einer Offenstellung und einer Schließstellung des Werkzeugs verfahrbar sind, und mit einem in der Offenstellung des Werkzeugs zwischen die Werkzeugteile (12, 14) einfahrbaren Arm (22) eines Handlingsystems (20) zum Entnehmen der Kunststoffartikel (36) aus Hohlräumen (16) in einem Werkzeugteil (12), wobei der Arm (22) in einer Führung (26) entlang einer zweiten, ebenfalls horizontal verlaufenden Achse (24) verfahrbar ist, die im wesentlichen rechtwinkelig zur ersten Achse (18) und im Bereich einer Unterseite (22b) des Armes (22) verläuft, **dadurch gekennzeichnet, dass** die Vorrichtung einen Förderer (34) umfasst, wobei der Förderer oberhalb der zweiten Achse (24) verläuft.

2. Vorrichtung nach Anspruch 1, **dadurch gekennzeichnet, daß** die Führung (26) unterhalb der Werkzeugteile (12, 14) angeordnet ist.

3. Vorrichtung nach Anspruch 1 oder 2, **dadurch gekennzeichnet, daß** die zweite Achse (24) im wesentlichen im Bereich der Führung (26) verläuft, und daß der Arm (22) um die zweite Achse (24) aus einer im wesentlichen vertikalen Stellung (22) in eine im wesentlichen horizontale Stellung (22') verschwenkbar ist.

4. Vorrichtung nach Anspruch 3,
**dadurch gekennzeichnet, dass** der Arm die Kunststoffartikel (36) in der horizontalen Stellung (22') vom Arm (22) auf den Förderer (34) übergeben kann.

5. Verwendung der Vorrichtung nach einem oder mehreren der Ansprüche 1 bis 4 in einem Reinraum (40) mit einem in dem Reinraum (40) herrschenden, vertikal nach unten gerichteten Laminarflow (41).

## Claims

1. Apparatus for the injection moulding of plastic articles (36) with a mould comprising several mould parts (12, 14), in which the mould parts (12, 14) can be moved relative to one another along a first axis (18) running horizontally between an open position and a closed position of the mould, and with an arm (22) of a handling system (20), capable of being moved in between the mould parts (12, 14) in the open position of the mould, for the removal of the plastic articles (36) from cavities (16) in a mould part (12), whereby the arm (22) is capable of movement in a guide (26) along a second axis (24) likewise running horizontally, which runs essentially at right angles to the first axis (18) and in the area of an underside (22b) of the arm (22), **characterised in that** the apparatus comprises a conveyor (34), whereby the conveyor runs above the second axis (24).

2. Apparatus according to Claim 1, **characterised in that** the guide (26) is arranged beneath the mould parts (12, 14).

3. Apparatus according to Claim 1 or 2, **characterised in that** the second axis (24) runs essentially in the area of the guide (26), and that the arm (22) is capable of being pivoted about the second axis (24) out of an essentially vertical position (22) into an essentially horizontal position (22').

4. Apparatus according to Claim 3, **characterised in that** the arm can transfer the plastic articles (36) in the horizontal position (22') from the arm (22) onto the conveyor (34).

5. Use of the device according to one or more of Claims 1 to 4 in a clean room (40) with a laminar flow (41) prevailing in the clean room (40), directed downwards.

## Revendications

1. Dispositif pour mouler par injection des articles en matière plastique (36) avec un moule comportant plusieurs parties de moule (12, 14), dans lequel les parties de moule (12, 14) sont mobiles l'une relativement à l'autre le long d'un premier axe horizontal (18) entre une position d'ouverture et une position de fermeture du moule, et avec un bras (22) d'un système de manipulation (20) apte à être introduit entre les parties de moule (12, 14) lorsque le moule est en position d'ouverture pour extraire les articles en matière plastique (36) des empreintes (16) présentes dans une partie de moule (12), le bras (22) pouvant être déplacé dans un élément de guidage (26) le long d'un second axe également horizontal (24) qui est sensiblement perpendiculaire au premier axe (18) et est situé au niveau d'une face inférieure (22b) du bras (22), **caractérisé en ce que** le dispositif comprend un convoyeur (34), ledit convoyeur s'étendant au-dessus du second axe (24).

2. Dispositif selon la revendication 1, **caractérisé en ce que** l'élément de guidage (26) est agencé au-dessous des parties de moule (12, 14).

3. Dispositif selon la revendication 1 ou la revendication 2, **caractérisé en ce que** le second axe (24) s'étend sensiblement au niveau de l'élément de guidage (26) et **en ce que** le bras (22) peut pivoter autour du second axe (24) depuis une position sensiblement verticale (22) vers une position sensiblement horizontale (22').

4. Dispositif selon la revendication 3, **caractérisé en ce que**, dans la position horizontale (22') du bras, les articles en matière plastique (36) peuvent être transférés du bras (22) sur le convoyeur (34).

5. Utilisation du dispositif selon l'une ou plusieurs des revendications 1 à 4 dans une salle blanche (40), ladite salle blanche (40) étant traversée par un flux laminaire (41) vertical orienté vers le bas.
